# EUROPEAN PATENT APPLICATION

(11) **EP 4 723 600 A1**
(43) Date of publication of application: **08.04.2026**
(21) Application number: 24822437.0
(22) Date of filing: 07.05.2024
(51) Int. Cl.: H04L 67/2895

(54) **DATA TRANSMISSION METHOD AND RELATED APPARATUS**

(30) Priority: 16.06.2023 CN 202310724077
(71) Applicant: Huawei Technologies Co., Ltd., Shenzhen, Guangdong 518129 (CN)
(72) Inventor: MA, Tianjun, Shenzhen, Guangdong 518129 (CN); JIANG, Weiyu, Shenzhen, Guangdong 518129 (CN); CHENG, Jianming, Shenzhen, Guangdong 518129 (CN); LI, Jieyu, Shenzhen, Guangdong 518129 (CN)
(74) Representative: Maiwald GmbH
(86) International application number: PCT/CN2024/091421
(87) International publication number: WO 2024/255483

(57) **Abstract**

Embodiments of this application provide a data transmission method and a related apparatus. The data transmission method includes: After a terminal establishes a secure connection to an edge proxy, the edge proxy sends key information corresponding to the terminal to a server, the server determines, based on the key information, a first key between the terminal and the edge proxy, the server decrypts, by using the first key, data sent by the terminal and forwarded by the edge proxy, and the edge proxy does not need to encrypt or decrypt the forwarded data sent by the terminal, thereby reducing a loss of computing resources of the edge proxy and improving a throughput of the edge proxy.

## Description

This application claims priority to Chinese Patent Application No. 202310724077.2, filed with the China National Intellectual Property Administration on June 16, 2023 and entitled "DATA TRANSMISSION METHOD AND RELATED APPARATUS", which is incorporated herein by reference in its entirety.

### TECHNICAL FIELD

This application relates to the field of communication technologies, and in particular, to a data transmission method and a related apparatus.

### BACKGROUND

Currently, "device-edge-cloud" collaboration services are widely applied to smart cities, smart manufacturing, and the like. The device-edge-cloud is used as a terminal-edge-cloud collaboration architecture. Before collaboration, a device side first establishes a secure connection to an edge side, and determines an encryption key between the device side and the edge side; and the edge side establishes a secure connection to a cloud side, and determines an encryption key between the edge side and cloud side. To ensure data transmission security, when the device side transmits data to the cloud side, the device side first encrypts the data based on the encryption key between the device side and the edge side, and transmits the encrypted data to the edge side; the edge side decrypts the data based on the encryption key between the device side and the edge side, encrypts the decrypted data based on the encryption key between the edge side and the cloud side, and then sends the encrypted data to the cloud side; and the cloud side decrypts the data based on the encryption key between the edge side and the cloud side after receiving the data.

In the foregoing data transmission process, the edge side needs to decrypt and encrypt the forwarded data, wasting computing resources and reducing a throughput of the edge side.

### SUMMARY

This application provides a data transmission method and a related apparatus. Key information between a terminal and an edge proxy is sent to a server, so that the server can generate an encryption key based on the key information, and decrypt, based on the encryption key, data forwarded by the edge proxy. In this way, the edge proxy does not need to decrypt or encrypt the forwarded data sent by the terminal, thereby resolving a technical problem in the conventional technology that a waste of computing resources and a decrease in a throughput of the edge proxy.

To achieve the foregoing objective, the following technical solutions are used in this application.

According to a first aspect, a data transmission method is provided, and is applied to an edge proxy. The edge proxy is a server having a reverse proxy function, and the data transmission method includes: after the edge proxy establishes a secure connection to a terminal, determining first addition information corresponding to the terminal, where the first addition information carries key information, the key information is used to generate a first key, and the first key is a key determined when the terminal establishes a secure connection to the edge proxy; forming key transmission data based on the first addition information; and sending the key transmission data to a server.

In this way, after the terminal establishes the secure connection to the edge proxy, the edge proxy sends the key information corresponding to the terminal to the server, and the server determines, based on the key information, the first key corresponding to the terminal, and decrypts, based on the first key, data sent by the terminal and forwarded by the edge proxy. In this way, the edge proxy does not need to decrypt or encrypt the forwarded data sent by the terminal, thereby reducing a loss of computing resources of the edge proxy and improving a throughput of the edge proxy. Encryption of the data forwarded by the edge proxy is completed by the terminal, and decryption is completed by the server. The edge proxy does not need to decrypt or encrypt the forwarded data, thereby reducing a quantity of times of using the encryption key on the edge proxy side and improving security of the encryption key.

Further, in this case, the secure connection between the server and the edge proxy is also established, and data between the server and the edge proxy may be encrypted by using a key between the server and the edge proxy, thereby ensuring security of key information transmission between the server and the edge proxy.

In some embodiments of the first aspect, the first addition information further carries identification information, the identification information is used to identify a corresponding terminal, and after sending the key transmission data to the server, the data transmission method further includes: receiving terminal encrypted data sent by the terminal, where the terminal encrypted data is encrypted by the terminal by using the first key; determining second addition information corresponding to the terminal, where the second addition information carries the identification information but does not carry the key information; and forming data transmission data based on the encrypted data and the second addition information; and sending the data transmission data to the server. Further, the corresponding terminal and the first key corresponding to the terminal are identified by using the identification information, so that the server can determine the corresponding key information based on the identification information. The data transmission information does not need to carry the key information, and the key information needs to be transmitted only once in the key transmission data, thereby avoiding transmitting the key information for a plurality of times and ensuring key security.

In this way, in addition to the key information, the key transmission information sent by the edge proxy to the server further carries the identification information, and the identification information may enable the server to establish an association between the key information and the terminal. After the key transmission information is sent to the server, the edge proxy forwards, to the server, data sent by another terminal, and the edge proxy does not need to include the key information. The server may determine the corresponding first key based on the identification information, and decrypt the forwarded data based on the first key. This reduces transmission of the key information, and ensures security of the key information. An association between the terminal and the first key is established by using the identification information, so that the edge proxy and the server obtain the corresponding key information based on the identification information.

In some embodiments of the first aspect, forming the key transmission data based on the first addition information includes:

receiving the terminal encrypted data sent by the terminal, where the terminal encrypted data is encrypted by the terminal by using the first key; and forming the key transmission data based on the terminal encrypted data and the first addition information.

In this way, after the terminal establishes the secure connection to the edge proxy, the edge proxy receives the terminal encrypted data sent by the terminal, and forms the key transmission data based on the terminal encrypted data and the first addition information that carries the key information, without changing an existing data transmission and forwarding process of the edge proxy, thereby facilitating implementation.

In some embodiments of the first aspect, the terminal encrypted data in the key transmission data is a first data packet that is sent by the terminal and that is received by the edge proxy after the terminal establishes the secure connection to the edge proxy.

In this way, the terminal encrypted data in the key transmission data is the first data packet that is sent by the terminal and that is received by the edge proxy after the terminal establishes the secure connection to the edge proxy, that is, after the secure connection is established, the key information is transmitted to the server, to ensure timeliness of transmission of the key information, so that the server can decrypt and encrypt, based on the key information, the data forwarded by the edge proxy, thereby reducing a loss of encrypted and encrypted computing resources of the edge proxy as soon as possible.

In some embodiments of the first aspect, the data transmission method further includes: receiving first encrypted data sent by the server, where the first encrypted data carries third addition information, and the third addition information carries the identification information but does not carry the key information; determining a corresponding terminal based on the identification information; removing the third addition information from the first encrypted data, to obtain second encrypted data, where the second encrypted data is encrypted by the server by using the first key corresponding to the terminal; and sending the second encrypted data to the terminal.

In some embodiments of the first aspect, after the first key between the terminal and the edge proxy is updated, the data transmission method further includes: forming a key update message based on the identification information, where the key update message carries a key update indication message and the second addition information, the second addition information carries the identification information, and the key update indication message indicates the server to update the first key.

In this way, after the first key between the terminal and the edge proxy is updated, update of the first key in the server is triggered by using the key update message, to ensure timeliness and security of the first key in the server.

In some embodiments of the first aspect, the key information is encrypted by the edge proxy by using a second key, and the second key is a key determined when the edge proxy establishes the secure connection to the server.

In this way, the key information is encrypted by using the second key, to ensure security of a key information transmission process.

In some embodiments of the first aspect, the first addition information is used as a tail of a data packet of the key transmission data.

In this way, the first addition information is used as a tail of a data packet of the terminal encrypted data, so that the first addition information is parsed by a subsequent device (for example, the server), thereby reducing a probability that the data packet is discarded because the data is not parsed.

In some embodiments of the first aspect, the first addition information further carries flag information, the flag information is a first value, and the first value indicates that the first addition information carries the key information.

In some embodiments of the first aspect, the identification information includes an edge proxy identifier and a terminal identifier, the edge proxy identifier is used to identify a corresponding edge proxy, and the terminal identifier is used to identify a corresponding terminal.

According to a second aspect, a data transmission method is provided, and is applied to a server. The data transmission method includes: receiving key transmission data sent by an edge proxy, where the edge proxy is a server having a reverse proxy function, the key transmission data carries first addition information, the first addition information carries key information, the key information is used to generate a first key, and the first key is a key determined when a terminal establishes a secure connection to the edge proxy; and determining the first key based on the key information.

In some embodiments of the second aspect, the first addition information further carries identification information, the identification information is used to identify a corresponding terminal, and after receiving the key transmission data sent by the edge proxy, the data transmission method further includes: receiving data transmission data sent by the edge proxy, where the data transmission data carries second addition information and terminal encrypted data, the second addition information carries the identification information but does not carry the key information, and the terminal encrypted data is encrypted by the terminal by using the first key; determining, based on the identification information, the first key corresponding to the terminal; and decrypting the terminal encrypted data based on the first key.

In some embodiments of the second aspect, the key transmission data further carries the terminal encrypted data, and the terminal encrypted data is encrypted by the terminal by using the first key.

In some embodiments of the second aspect, after the server receives the key transmission data, the data transmission method further includes: determining third addition information corresponding to the terminal, where the third addition information carries the identification information but does not carry the key information; forming first encrypted data based on the third addition information; and sending the first encrypted data to the edge proxy.

In some embodiments of the second aspect, the data transmission method further includes: receiving a key update message, where the key update message carries a key update indication message and the second addition information, the second addition information carries the identification information, and the key update indication message indicates the server to update the first key; determining a corresponding terminal based on the identification information; and updating, based on the key update indication message, the first key corresponding to the terminal.

In some embodiments of the second aspect, the key information is encrypted by the edge proxy by using a second key, and the second key is a key determined when the edge proxy establishes the secure connection to the server; and determining the first key based on the key information includes: decrypting the key information by using the second key, to obtain the decrypted key information; and determining the first key based on the decrypted key information.

In some embodiments of the second aspect, the first addition information is used as a tail of a data packet of the key transmission data.

In some embodiments of the second aspect, the first addition information further carries flag information, the flag information is a first value, and the data transmission method further includes: determining, based on the first value, that the first addition information carries the key information.

In some embodiments of the second aspect, the first addition information further carries integrity information, and the data transmission method further includes: checking integrity of the key transmission data based on the first key and the integrity information.

According to a third aspect, an edge proxy is provided, and includes:
a memory, where the memory includes computer-readable instructions; and
a processor communicating with the memory, where the processor is configured to execute the computer-readable instructions, so that the edge proxy performs the data transmission method according to any one of the implementations of the first aspect.

According to a fourth aspect, a server is provided, and includes:
a memory, where the memory includes computer-readable instructions; and
a processor communicating with the memory, where the processor is configured to execute the computer-readable instructions, so that the server performs the data transmission method according to any one of the implementations of the second aspect.

According to a fifth aspect, a data transmission system is provided, and includes a server and an edge proxy. The edge proxy is configured to perform the data transmission method according to any one of the embodiments of the first aspect, and the server is configured to perform the data transmission method according to any one of the implementations of the second aspect.

According to a sixth aspect, a computer-readable storage medium is provided, and includes a program or instructions. When the program or the instructions are executed by a processor, the data transmission method according to either of the first aspect or the second aspect is implemented.

According to a seventh aspect, a computer program product is provided, and includes a computer program. When the computer program is executed by a processor, the data transmission method according to either of the first aspect or the second aspect is implemented.

For beneficial effects brought by each of the possible implementations of the data transmission method according to the second aspect, the edge proxy according to the third aspect, the server according to the fourth aspect, the data transmission system according to the fifth aspect, the computer-readable storage medium according to the sixth aspect, and the computer program product according to the seventh aspect of embodiments of this application, refer to descriptions in the possible implementations of the first aspect. Details are not described herein again.

### BRIEF DESCRIPTION OF DRAWINGS

FIG. 1A is a diagram of an architecture of a data transmission system;
FIG. 1B is a diagram of an architecture of another data transmission system;
FIG. 1C is a diagram of an architecture of still another data transmission system;
FIG. 2 is a diagram of an architecture of establishing a TLS secure connection in the data transmission system shown in FIG. 1A;
FIG. 3 is a schematic flowchart of a data transmission method according to an embodiment of this application;
FIG. 4 is a diagram of a packet format of first addition information according to an embodiment of this application;
FIG. 5 is a diagram of a packet encapsulation format of key transmission data according to an embodiment of this application;
FIG. 6 is a schematic flowchart of another data transmission method according to an embodiment of this application;
FIG. 7 is a diagram of a process in which an edge proxy forms key transmission data according to an embodiment of this application;
FIG. 8 is a diagram of a process in which a server processes key transmission data according to an embodiment of this application;
FIG. 9 is a schematic flowchart of still another data transmission method according to an embodiment of this application;
FIG. 10 is a diagram of a packet encapsulation format of data transmission data according to an embodiment of this application;
FIG. 11 is a diagram of a process in which an edge proxy assembles data transmission data according to an embodiment of this application;
FIG. 12 is a schematic flowchart of yet another data transmission method according to an embodiment of this application;
FIG. 13 is a diagram of a process in which an edge proxy processes first encrypted data according to an embodiment of this application;
FIG. 14 is a schematic flowchart of still yet another data transmission method according to an embodiment of this application;
FIG. 15 is a diagram of a structure of an edge node according to an embodiment of this application; and
FIG. 16 is a diagram of a structure of a server according to an embodiment of this application.

### DESCRIPTION OF EMBODIMENTS

The following describes technical solutions of this application with reference to accompanying drawings. It is clearly that the described embodiments are merely some rather than all of embodiments of this specification.

For ease of understanding, terms used in embodiments of this application are first briefly described.

### 1. Reverse proxy

As a type of proxy server, the reverse proxy is located between a user and a server. For the user, the reverse proxy server is the server. That is, the user can obtain resources of the server by directly accessing the reverse proxy server.

### 2. Elastic load balance (Elastic Load Balance, ELB)

The ELB is configured to automatically distribute access traffic to a plurality of cloud servers, and expand external service capabilities of an application system, to achieve higher levels of application fault tolerance. The ELB may be used as a function of the cloud server.

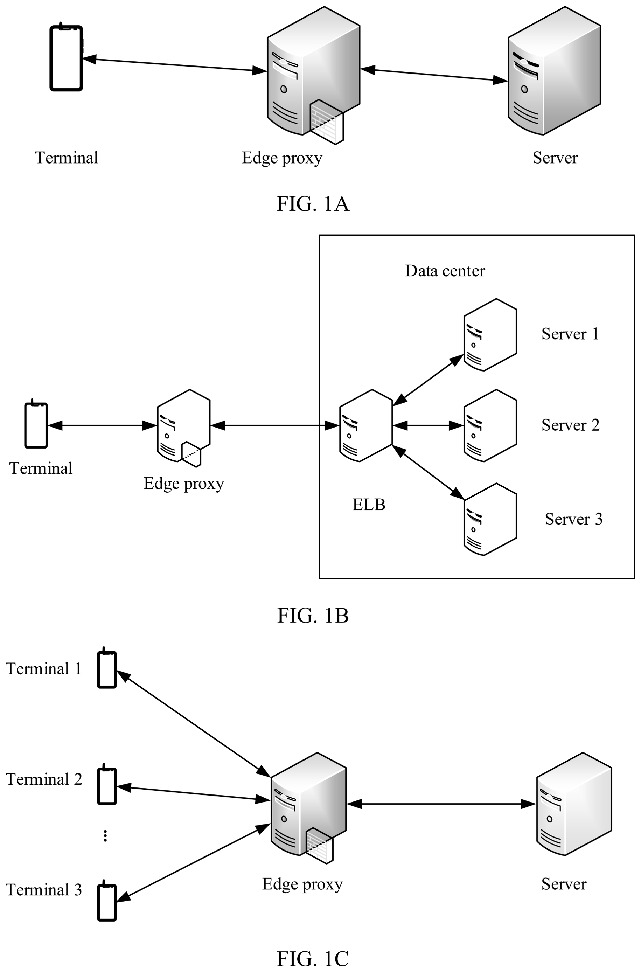

FIG. 1A is a diagram of an architecture of a data transmission system. The data transmission system in FIG. 1A includes a terminal, an edge proxy, and a server. The data transmission system in FIG. 1A is also referred to as a device-edge-cloud architecture, that is, the terminal is used as a device side, the edge proxy is used as an edge side, and the server is used as a cloud side.

The terminal is used as a user side, that is, the device side. The terminal may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, a smart home device, and/or a smart city device. A specific type of the terminal is not specially limited in this embodiment of this application. The terminal may be equipped with iOS, Android, Microsoft, or another operating system.

The edge proxy is a server having a reverse proxy function, and is configured to forward, to the server, data sent by the terminal, or send, to the corresponding terminal, data sent by the server, so that the terminal can obtain a resource on the server side through the foregoing channel.

The server may be configured to provide the terminal with services such as data storage, data processing, data transmission, and an elastic cloud server (Elastic Cloud Server, ECS).

FIG. 1A shows only one server. It may be understood that in another embodiment, there may be a plurality of servers on a cloud side. As shown in FIG. 1B, a data center is disposed on a cloud side of a data transmission architecture, and the data center includes three servers. To distribute access traffic of the terminal to a corresponding server according to a policy, a corresponding ELB may be disposed between the server and an edge proxy. The ELB may receive incoming traffic from the edge proxy and forward the incoming traffic to one or more backend servers.

Further, the ELB may be a server having a data distribution function, or may be used as a logical function of a backend service server. For ease of understanding, in the following descriptions, the data center is collectively referred to as a server, and the server may be a collective term of one or more servers, or may be a collective term of a plurality of servers including an ELB function.

To ensure data transmission security, before data transmission, the terminal needs to first establish a transport layer security (Transport Layer Security, TLS) connection to the edge proxy, that is, the terminal establishes a TLS protocol-based secure connection to the edge proxy, and the edge proxy also needs to establish the TLS connection to the corresponding server.

To reduce a quantity of connections established between the edge proxy and the server, and reduce overheads on the server side, when a plurality of terminals establish TLS connections to the edge proxy, the edge proxy may establish only one TLS long connection to the server and maintain the long connection. For example, the edge proxy initiates establishment of a TLS connection to the server only when a first terminal establishes a TLS connection to the edge proxy.

Certainly, in another embodiment, a quantity of TLS connections between the edge proxy and the server may be set based on an actual requirement, and is not limited to 1.

FIG. 1C is a diagram of an architecture of another data transmission system. The data transmission system in FIG. 1C is similar to that in FIG. 1A. The data transmission system in FIG. 1C includes a terminal, an edge proxy, and a server, the terminal establishes a corresponding TLS connection to the edge proxy, and the edge proxy establishes a corresponding TLS connection to the server. A difference lies in that the data transmission system in FIG. 1C includes a plurality of terminals, the plurality of terminals simultaneously establish TLS connections to the same edge proxy, the edge proxy establishes a TLS long connection (that is, a primary channel in FIG. 1C) to one server, and data transmitted between the plurality of terminals and the server needs to pass through a long connection between the edge proxy and the server.

It is easily understood that the primary channel is merely an example explanation of a secure connection between the edge proxy and the server for ease of understanding.

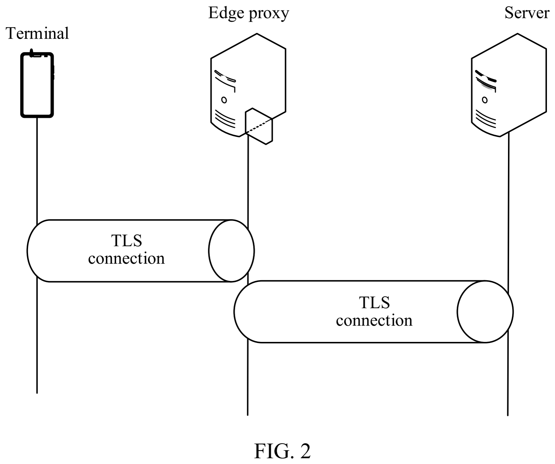

To facilitate understanding of a TLS connection establishment process, the following uses FIG. 2 as an example for description. FIG. 2 is a diagram of establishing a secure connection in the data transmission architecture shown in FIG. 1A. The secure connection in the data transmission architecture includes establishment of a TLS connection between the terminal and the edge proxy and establishment of a TLS connection between the edge proxy and the server. A process of establishing the TLS connection between the terminal and the edge proxy and a process of establishing the TLS connection between the edge proxy and the server are similar to each other, and both are TLS protocol-based handshake and negotiation processes. The following uses only a TLS handshake and key agreement process between the terminal and the edge proxy as an example for description. The TLS handshake and key agreement process between the terminal and the edge proxy includes the following steps:

After the terminal establishes a transmission control protocol (transmission control protocol, TCP) connection to the edge proxy, the terminal sends Client Hello to the edge proxy, where Client Hello carries a cipher suite supported by the terminal and a random number.

After receiving Client Hello sent by the terminal, the edge proxy returns Server Hello to the terminal, where Server Hello carries a cipher suite selected by the edge proxy from a supported cipher suite list provided by the terminal for use, and also carries a random number.

The edge proxy sends a certificate to the terminal, where the certificate includes a public key and a signature.

The terminal verifies the certificate sent by the edge proxy. After the verification succeeds, the terminal generates a pre-master secret (pre-master secret), extracts a public key from the certificate, encrypts the pre-master secret by using the public key of the certificate, and then sends the pre-master secret to the edge proxy.

The terminal generates an encryption key based on the random number generated when Client Hello is sent, the random number carried in Server Hello sent by the edge proxy, and the pre-master secret generated by the terminal, where the encryption key is used to encrypt and decrypt data transmitted between the terminal and the edge proxy.

Then, the terminal sends a Change Cipher Spec message to the edge proxy, to notify the edge proxy that the terminal subsequently encrypts the data by using the negotiated encryption key and then transmits the data. In addition, Client Key Exchange and Finished messages are sent to the edge proxy, where the Finished message is encrypted by using the encryption key.

After receiving the Client Key Exchange message, the edge proxy extracts the encrypted pre-master secret from the message, then obtains the pre-master secret through decryption based on a private key of the certificate, and generates the encryption key based on the random number carried in Client Hello sent by the terminal, the random number carried in Server Hello, and the pre-master secret.

The edge proxy sends a Change Cipher Spec message to the terminal, to notify the terminal that the edge proxy encrypts subsequent data by using the negotiated encryption key and then transmits the data.

Therefore, the TLS handshake between the terminal and the edge proxy is completed, and then communication starts to be performed by using the encryption key.

Further, a TLS handshake and key agreement process between the edge proxy and the server is similar to a TLS handshake and key agreement process between the terminal and the edge proxy. After the TLS handshake and key agreement process between the edge proxy and the server is completed, the encryption key between the edge proxy and the server is determined, and then the edge proxy and the server start to communicate by using the encryption key.

However, after the terminal establishes the TLS connection to the edge proxy, and the edge proxy establishes the TLS connection to the server, the data transmission architectures in FIG. 1A, FIG. 1B, and FIG. 1C has the following problem: When the terminal transmits transmission data to the server, the terminal needs to send the data to the edge proxy, and then the edge proxy sends the transmission data to the corresponding server. To ensure data transmission security, both data transmitted between the terminal and the edge proxy and data transmitted between the edge proxy and the server need to be securely encrypted. An encryption key between the terminal and the edge proxy is different from an encryption key between the edge proxy and the server. Therefore, when the edge proxy forwards, to the server, the transmission data sent by the terminal side, the edge proxy needs to first decrypt the transmission data by using the encryption key between the terminal and the edge proxy, to obtain the decrypted transmission data, and then the edge proxy encrypts the decrypted transmission data by using the encryption key between the edge proxy and the server, and sends the encrypted data to the corresponding server. In the foregoing data transmission process, the edge proxy needs to frequently decrypt and encrypt the forwarded data, causing high consumption of computing resources of the edge proxy and affecting a throughput of the edge proxy. In addition, each time the edge proxy forwards data, the edge proxy needs to encrypt and decrypt the data, and needs to frequently use the encryption key, affecting key security.

Based on the foregoing problem, an embodiment of this application provides a data transmission method. After a terminal establishes a secure connection to an edge proxy, the edge proxy forwards key information corresponding to the terminal to a server, and the server determines an encryption key between the terminal and the edge proxy based on the key information. For data sent by the terminal to the edge proxy, the edge proxy may directly forward the data to the server, without decrypting or encrypting the data, and the server may decrypt, based on the encryption key corresponding to the terminal, the data forwarded by the edge proxy. Because the edge proxy does not need to encrypt or decrypt the forwarded data, consumption of computing resources of the edge proxy is reduced and a throughput of the edge proxy is improved. Encryption of the data forwarded by the edge proxy is completed by the terminal, and decryption is completed by the server. The edge proxy does not need to decrypt or encrypt the forwarded data, thereby reducing a quantity of times of using the encryption key on the edge proxy side and improving security of the encryption key.

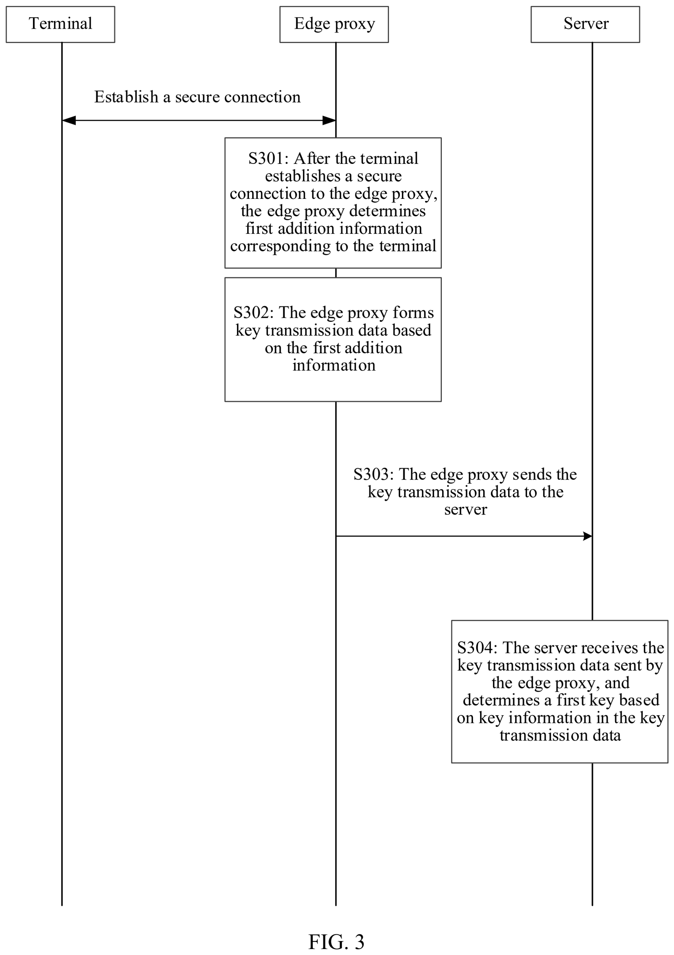

FIG. 3 is a schematic flowchart of a data transmission method according to an embodiment of this application. The data transmission method provided in this embodiment of this application may be applied to the data transmission systems shown in FIG. 1A, FIG. 1B, and FIG. 1C. After a terminal establishes a secure connection to a corresponding edge proxy, the edge proxy sends key information corresponding to the terminal to a server, so that the server can determine an encryption key between the terminal and the edge proxy based on the key information.

The following uses an example in which the data transmission method is applied to the data transmission architecture shown in FIG. 1A for description. As shown in FIG. 3, the method includes S301 to S304.

S301: After the terminal establishes the secure connection to the edge proxy, the edge proxy determines first addition information corresponding to the terminal.

The first addition information carries key information, the key information is used to generate a first key, and the first key is a key determined when the terminal establishes the secure connection (for example, a TLS connection) to the edge proxy.

Specifically, after the edge proxy establishes the secure connection to the terminal, and determines an encryption key (that is, a first key) between the edge proxy and the terminal, data transmitted between the edge proxy and the terminal may be encrypted by using the first key. The edge proxy determines the first addition information corresponding to the terminal, that is, key information of the key determined when the edge proxy establishes the secure connection to the terminal.

In some embodiments, the key information includes an application secret ciphertext (application_secret), and the application secret ciphertext is used for derivation and update of the first key.

For example, the application secret ciphertext is key parameters derived from a key in the TLS1.3 standard: client_application_secret and client_application_secret, and the encryption key, that is, the first key, may be generated based on the application secret ciphertext.

Certainly, the key information may alternatively be another parameter in another key generation process, for example, a random number generated in a handshake and key agreement process between the terminal and the edge proxy, provided that the server can generate the corresponding first key based on the key information.

In some embodiments, the key information further includes a cipher suite (cipher suite, also referred to as a cipher suite), and the cipher suite is used to identify an algorithm in a derivation process of the first key. It may be understood that, if the cipher suite corresponding to the key generated between the terminal and the edge proxy is fixed, the key information may not carry the cipher suite.

In some embodiments, the first addition information further includes flag information, used to identify whether the first addition information includes the key information. For example, if the flag information is 0, the first addition information carries the identification information and the key information. That is, if the flag information is a first value, the first value indicates that the first addition information carries the key information.

In some embodiments, the first addition information further carries integrity information, where the integrity information is also referred to as an integrity check code, and is used to check integrity of the first addition information, to perform integrity protection on the first addition information, that is, the first addition information is not damaged or modified, is not lost, and cannot be changed without authorization in a transmission process of the edge proxy. The integrity information is determined by the edge proxy by using an integrity key and a preset integrity algorithm, where the integrity key is the same as the first key.

In some embodiments, the first addition information further carries length information, and the length information indicates a length of the first addition information. The length may be an agreed fixed length, or may be a length determined based on an actual requirement.

S302: The edge proxy forms key transmission data based on the first addition information.

Specifically, the edge proxy forms the key transmission data based on the first addition information, to transmit the key information in the first addition information by using the key transmission data.

For example, after the edge proxy establishes the secure connection to the terminal, the edge proxy side actively forms the key transmission data based on the first addition information corresponding to the terminal.

In some embodiments, the first addition information is used as a tail of a data packet of the key transmission data, so that the first addition information is parsed by a subsequent device (for example, the server), thereby reducing a probability that the data packet is discarded because the data is not parsed. It may be understood that the first addition information may also be located at another location of the key transmission data, for example, located in the middle of the key transmission data or at another specified location.

S303: The edge proxy sends the key transmission data to the server.

The key transmission data carries the first addition information.

S304: The server receives the key transmission data sent by the edge proxy, and determines the first key based on the key information in the key transmission data.

Specifically, because the key transmission data transmitted by the edge proxy carries the key information, after receiving the key transmission data, the server may determine the corresponding first key based on the key information.

In some embodiments, a manner of generating the first key may be as follows: The server uses the key information as input of a preset key derivation algorithm, and uses output of the key derivation algorithm as the first key. The key derivation algorithm may be SHA256.

In this way, after the terminal establishes the secure connection to the edge proxy, the edge proxy sends the key information corresponding to the terminal to the server. The server may generate the first key between the edge proxy and the terminal based on the key information, and may decrypt, based on the first key, data forwarded by the edge proxy. The edge proxy does not need to decrypt or encrypt the forwarded data sent by the terminal, thereby reducing consumption of computing resources of the edge proxy and improving a throughput of the edge proxy. Encryption of the data forwarded by the edge proxy is completed by the terminal, and decryption is completed by the server. The edge proxy does not need to decrypt or encrypt the forwarded data, thereby reducing a quantity of times of using the encryption key on the edge proxy side and improving security of the encryption key.

In some embodiments, in S302, the key information in the first addition information is encrypted by the edge proxy by using a second key, and the second key is a key determined when the edge proxy establishes a secure connection (for example, a TLS connection) to the server. After receiving the key transmission data, the server may decrypt the key information based on the second key corresponding to the edge proxy. The key information is decrypted to ensure key information transmission security.

In another embodiment, the edge proxy may encrypt the key transmission data. For example, the edge proxy encrypts a payload (payload) and the first addition information in the key transmission data by using the second key. The server may decrypt the payload and the first addition information based on the second key, and then determine the first key based on key information in the decrypted first addition information. In this way, the edge proxy only needs to perform encryption based on the second key, and a decryption process is performed by the server, thereby reducing a calculation loss of the edge proxy.

In some embodiments, the first addition information further includes integrity information. When the first addition information further includes integrity information, after S304, the method may further include:
determining integrity check information based on the first key and second encrypted data; and
determining integrity of the second encrypted data based on the integrity information and the integrity check information.

Specifically, the server calculates the integrity check information based on the second encrypted data, the second key, and a preset integrity algorithm. If the integrity check information is the same as the integrity information (for example, if values of the integrity check information and the integrity information are both 10, the values are equal), it is determined that the second encrypted data has integrity, that is, is not damaged or tampered with in a transmission process. If the integrity check information is different from the integrity information, it is determined that the second encrypted data does not have integrity, and the second encrypted data may be discarded subsequently.

In some embodiments, the first addition information further carries length information, and the server may determine, based on the length information, a length of the first addition information that is in the second encrypted data and that is used as a tail.

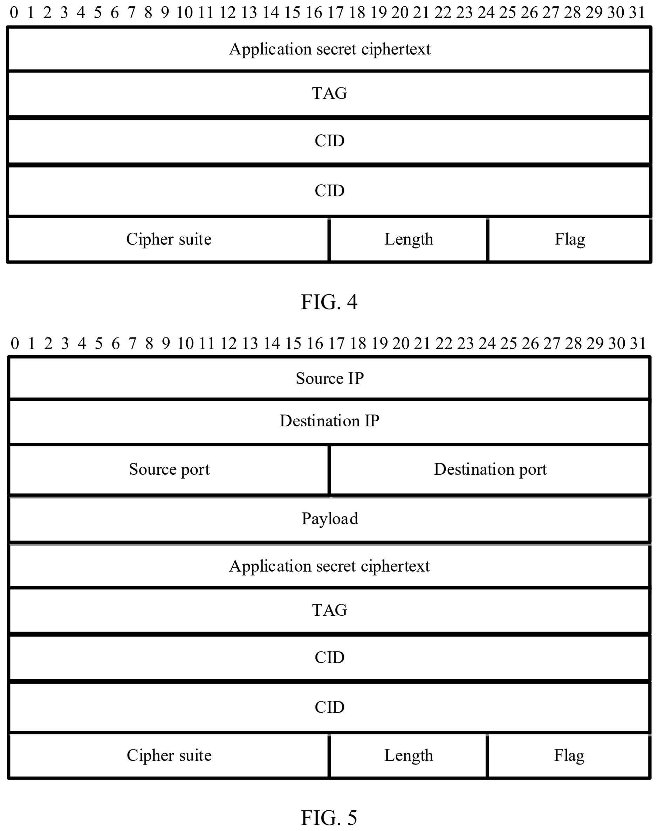

FIG. 4 is a diagram of a packet format of first addition information according to an embodiment of this application.

In FIG. 4, a length of the first addition information is 20 bytes. A length of TAG is 8 bytes. TAG is integrity information, and a length of TAG is 8 bytes; CID (Connection ID) is identification information, and a length of CID is 16 bytes; a length of a cipher suite (Cipher_ID) is 2 bytes; Length is length information, and a length of Length is 1 byte; and Flag is flag information, and a length of Flag is 1 byte. If a value of Flag is 0, the first addition information carries key information (and Cipher_ID). It may be understood that FIG. 4 is merely an example of a packet format of the first addition information, and does not constitute a limitation on content or a format of the first addition information.

FIG. 5 is a diagram of a packet encapsulation format of key transmission data according to an embodiment of this application. The key transmission data includes terminal encrypted data and first addition information. Specific content of the first addition information is described in FIG. 5. Details are not described herein again. In FIG. 5, a source IP and a destination IP are respectively addresses of two nodes in a data transmission process. For example, if a terminal sends data to an edge proxy, the source IP is an IP address of the terminal, and the destination IP is an IP address of the edge proxy. Similarly, a source port is a port address corresponding to the terminal, and a destination port is a port address corresponding to the edge proxy.

In this way, after receiving the terminal encrypted data, the edge proxy re-encapsulates the terminal encrypted data. Specifically, in FIG. 5, the IP address of the terminal in the source IP is replaced with the IP address of the edge proxy, and the destination IP address in the destination IP field is replaced with an IP address of the server. In addition, a corresponding source port and a corresponding destination port are adjusted based on an actual scenario, and the first addition information is used as a tail of the terminal encrypted data, to form key transmission data.

Because the first addition information in FIG. 5 carries key information (that is, an application secret ciphertext and a cipher suite), Flag (flag information) in FIG. 5 is a first value, indicating that the first addition information in the key transmission data carries the key information.

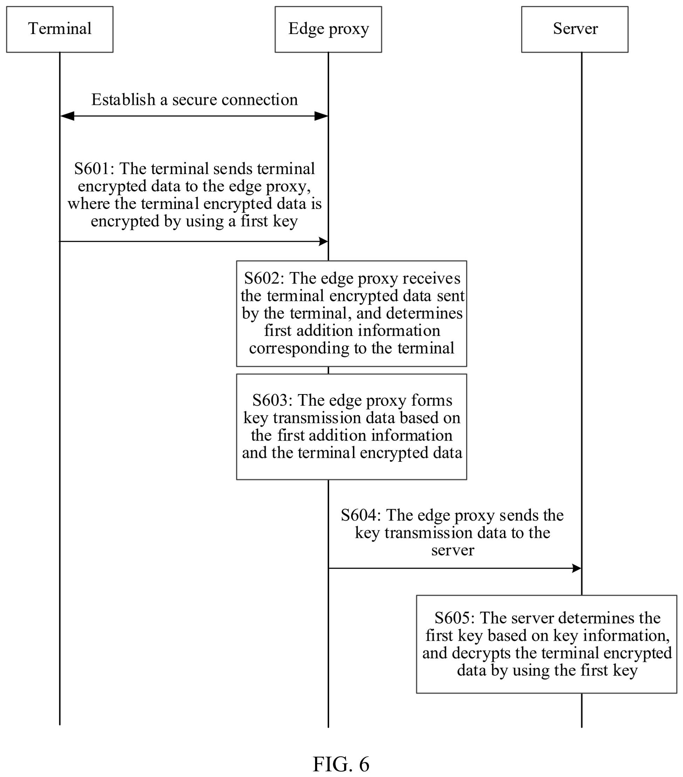

It may be understood that, after the terminal establishes the secure connection to the edge proxy, the edge proxy forms the key transmission data based on the first addition information, and sends the key transmission data to the server, to send the first addition information that carries the key information to the server. Alternatively, the key transmission data may be formed based on a data packet and the first addition information after the terminal sends the data packet to the edge proxy and the edge proxy receives the data packet, after the terminal establishes the secure connection to the edge proxy. FIG. 6 is a schematic flowchart of another data transmission method according to an embodiment of this application. As shown in FIG. 6, the method includes S601 to S605.

S601: A terminal sends terminal encrypted data to an edge proxy, where the terminal encrypted data is encrypted by using a first key.

Specifically, after the terminal establishes a TLS protocol-based secure connection to the edge proxy, an encryption key, that is, the first key, between the terminal and the edge proxy is determined. When the terminal needs to use a resource of a server, the terminal sends data to the server. To ensure data security, the terminal first encrypts the to-be-transmitted data by using the first key, to obtain the terminal encrypted data.

It may be understood that, in another embodiment, a secure connection based on another security protocol, for example, HTTPS, may be established between the terminal and the edge proxy.

S602: The edge proxy receives the terminal encrypted data sent by the terminal, and determines first addition information corresponding to the terminal.

The first addition information carries key information.

Specifically, after the terminal establishes a secure connection to the edge proxy, the edge proxy receives the terminal encrypted data sent by the terminal, and then determines the first addition information corresponding to the terminal.

S603: The edge proxy forms key transmission data based on the terminal encrypted data and the first addition information.

In some embodiments, the first addition information is used as a tail of a data packet of the terminal encrypted data, so that the first addition information is parsed by a subsequent device (for example, the server), thereby reducing a probability that the data packet is discarded because the data is not parsed.

S604: The edge proxy sends the key transmission data to the server.

S605: The server receives the key transmission data sent by the edge proxy, determines the first key based on the key information, and decrypts the terminal encrypted data by using the first key.

In this way, when the terminal establishes the secure connection to the edge proxy, the edge proxy receives the terminal encrypted data sent by the terminal, and the edge proxy forms the key transmission data based on the terminal encrypted data and the first addition information corresponding to the terminal, to send the key information corresponding to the terminal to the server, so that the server can determine the corresponding first key based on the key information, and the server can decrypt, based on the first key, the data sent by the terminal and forwarded by the edge proxy. In this way, the edge proxy does not need to decrypt or encrypt the forwarded data, thereby reducing consumption of computing resources of the edge proxy and improving a throughput of the edge proxy.

In some embodiments, a manner in which the server decrypts the terminal encrypted data may be: using the first key and the terminal encrypted data as input of a preset encryption algorithm, where output of the encryption algorithm is the decrypted terminal encrypted data.

In some embodiments, the terminal encrypted data carried in the key transmission data may be a first data packet sent by the terminal to the edge proxy after the terminal establishes the secure connection to the edge proxy.

In this way, after the terminal establishes the secure connection to the edge proxy, the edge proxy sends, to the server by using the first transmitted data packet sent by the terminal, the key information corresponding to the terminal. In this way, after the terminal establishes the secure connection to the edge proxy, the server may decrypt all data packets sent by the terminal via the edge proxy, and the edge proxy does not need to decrypt or encrypt the forwarded data, thereby reducing consumption of computing resources of the edge proxy and improving a throughput of the edge proxy. In addition, a trigger moment of the key information is determined based on the first data packet, to facilitate subsequent implementation and detection.

Further, after the edge proxy establishes a secure connection to the terminal, if the terminal sends a first data packet to the edge proxy, the edge proxy forms key transmission data based on the first data packet and first addition data that carries the key information, and sends the key transmission data to the server. When the terminal sends a non-first data packet to the edge proxy, and the edge proxy forwards the non-first data packet to the server, the forwarded non-first data packet does not need to carry the key information.

It may be understood that, in another embodiment, the terminal encrypted data carried in the key transmission data may be a non-first data packet sent by the terminal to the edge proxy after the terminal establishes the secure connection to the edge proxy, for example, a preset instruction in the edge proxy, where the preset instruction enables the edge proxy to form key transmission data by using the key information and an N^{th} data packet when the edge proxy receives the N^{th} data packet sent by the terminal, and then send the key transmission data to the server, where N is a positive integer greater than 1. Further, when the terminal sends an (N+1)^{th} data packet to the edge proxy, and the edge proxy forwards the (N+1)^{th} data packet to the server, the forwarded (N+1)^{th} data packet does not need to carry the key information.

In some embodiments, the first addition information further carries identification information, and the identification information is used to identify a corresponding terminal. It may be understood that each edge proxy may establish a secure connection to a plurality of terminals. To distinguish between the plurality of terminals, the edge proxy may set a corresponding identifier, that is, identification information, for each terminal, so that the edge proxy can determine, based on the identification information, the corresponding terminal and the first key corresponding to the terminal. The identification information may be randomly generated and allocated by the edge proxy after the edge proxy receives first transmission data sent after the terminal establishes the secure connection to the edge proxy, or may be preset by a user in the edge proxy, and then the edge proxy selects one of a plurality of pieces of identification information as the identification information corresponding to the terminal.

Further, after the edge proxy determines the identification information corresponding to the terminal, the edge proxy and the server may store the identification information, so that the corresponding terminal and the first key corresponding to the terminal can be subsequently identified based on the identification information.

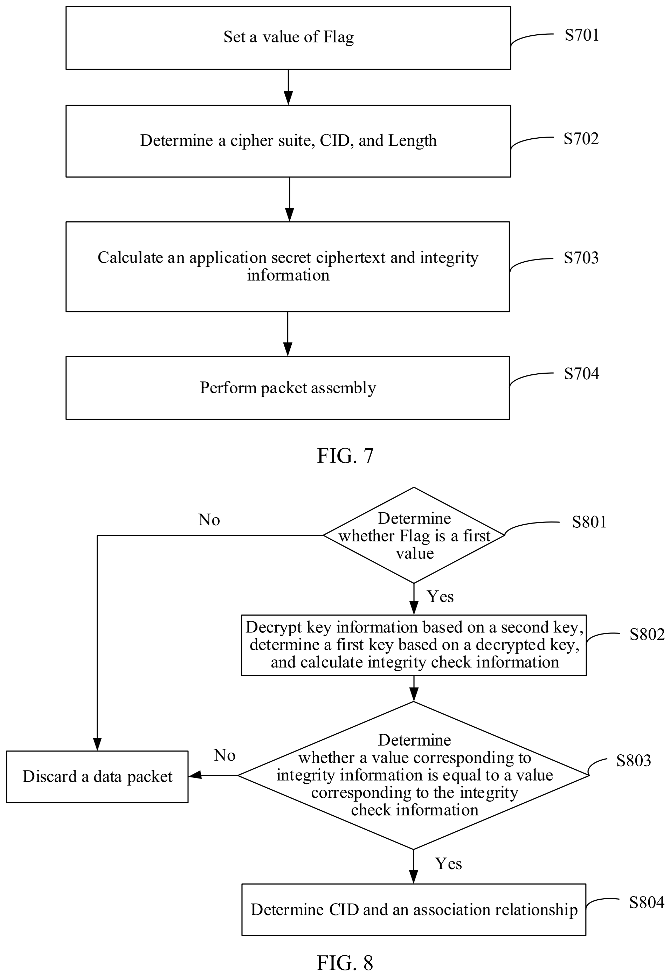

The following uses an example in which after the edge proxy establishes a secure connection to the terminal, the edge proxy receives terminal encrypted data sent by the terminal, and forms, based on the terminal encrypted data, the data transmission data shown in FIG. 5 for description. FIG. 7 is a diagram of a process in which an edge proxy forms key transmission data according to an embodiment of this application. As shown in FIG. 7, the process includes S701 to S704.

S701: Set a value of Flag.

Specifically, after a terminal establishes a secure connection to the edge proxy, and the edge proxy sends key information corresponding to the terminal to a server, the edge proxy receives terminal encrypted data sent by the terminal, and determines that Flag is a first value. For example, the first value is 0, indicating that first addition information does not carry the key information.

Further, if the terminal encrypted data carried in the key transmission data is a first data packet sent by the terminal to the edge proxy after the terminal establishes the secure connection to the edge proxy, the first value further indicates that the terminal encrypted data is a non-first data packet.

If the terminal encrypted data carried in the key transmission data is a non-first data packet sent by the terminal to the edge proxy after the terminal establishes the secure connection to the edge proxy, the first value indicates that the first addition information does not carry the key information. The non-first data packet may be an N^{th} data packet sent by the terminal to the edge proxy after the terminal establishes the secure connection to the edge proxy, where N is a positive integer greater than 1.

S702: Determine a cipher suite, CID, and Length.

Specifically, the edge proxy may find the cipher suite corresponding to the terminal from a memory, and then set cipher_ID. CID is identification information, and the edge proxy may randomly allocate CID to the terminal, or may allocate CID according to a preset rule. For example, CID is 64 bits, first 32 bits of CID are set to 0, and last 32 bits of CID are set to random values. Length is a length of the first addition information, and the length may be a fixed value, or may be a value that is set based on an actual scenario.

S703: Calculate an application secret ciphertext and integrity information.

Specifically, the edge proxy determines the application secret ciphertext corresponding to the terminal, that is, application secret ciphertexts Client_application_secret_A and EdgeLB_application_secret_A used when the terminal establishes a TLS connection to the edge proxy, and an encryption key, that is, a second key (for example, EdgeLB_application_key_B), generated when the edge proxy establishes a TLS connection to the server, then encrypts the application secret ciphertext by using the second key and a preset encryption algorithm, and calculates, based on the second key and a preset integrity protection algorithm, the integrity information corresponding to the first addition information.

S704: Perform packet assembly.

Specifically, Flag, the cipher suite, CID, Length, the application secret ciphertext, and the integrity information are used to form the first addition information, and the first addition information is used as a tail of the terminal encrypted data to form a new data packet, that is, the key transmission data.

After receiving the key transmission data sent by the edge proxy, the server may perform corresponding processing on a related field in the key transmission data. FIG. 8 is a diagram of a process in which a server processes key transmission data according to an embodiment of this application. As shown in FIG. 8, a process in which the server processes the key transmission data includes S801 to S804.

S801: Determine whether Flag is a first value.

Specifically, the server receives the key transmission data sent by the edge proxy, where the key transmission data carries terminal encrypted data and first addition information. The server first determines whether Flag (that is, flag information) is the first value (for example, 0), and if Flag is the first value, determines that the first addition information carries identification information and key information; or if Flag is a second value (for example, 1), discards the data packet.

S802: Decrypt the key information based on a second key, determine a first key based on the decrypted key information, and calculate integrity check information.

Specifically, if Flag is the first value, the first addition information carries the identification information and the key information, and the server decrypts the key information by using the second key, and generates the corresponding first key based on the decrypted key information. A key derivation manner is not described herein again.

Then, the server determines corresponding integrity check information (for example, a check code) based on the first key and the key transmission data.

S803: Determine whether a value corresponding to integrity information is equal to a value corresponding to the integrity check information.

Specifically, if the integrity information and the integrity check information carry corresponding integrity values, and the values of the integrity information and the integrity check information are equal (for example, the values are equal if the values are both 10), it is determined that the key transmission data has integrity, that is, the key transmission data is not damaged or tampered with in a transmission process, and a subsequent step may be performed; or if the values of the integrity information and the integrity check information are not equal, it is determined that the second encrypted data does not have integrity, for example, is damaged or modified, and the data packet is discarded.

S804: Determine CID and an association relationship.

Specifically, CID is the identification information carried in the first addition information received by the server, and then the server establishes an association relationship between the identification information, the terminal, and the corresponding first key, so that the corresponding first key or the corresponding identification information can be subsequently searched for based on the association relationship.

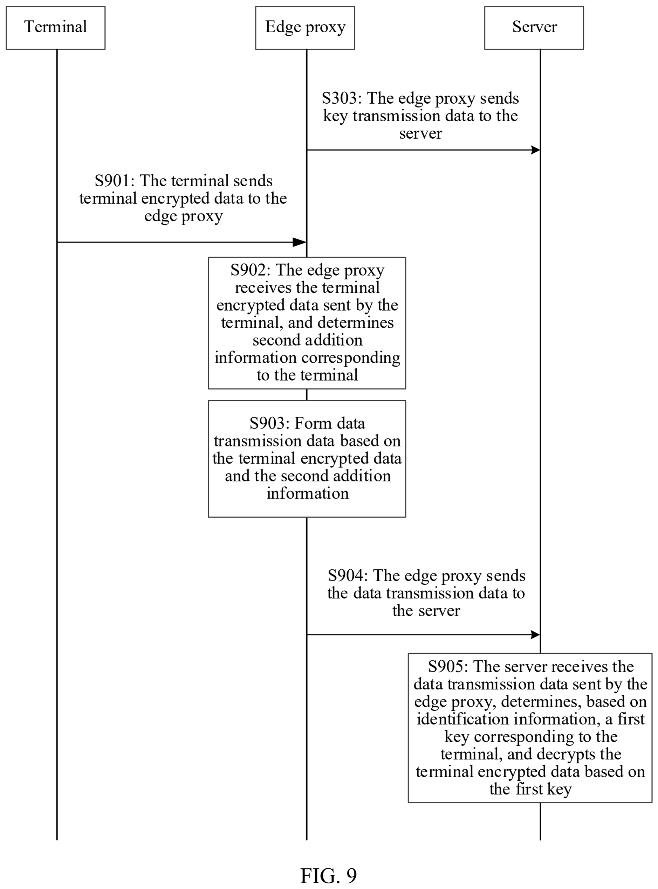

It may be understood that, after the edge proxy sends the key transmission data to the server, the server side receives the key transmission data, and may form the first key based on the key information in the key transmission data. The server side may store the first key corresponding to the terminal. Therefore, when forwarding, to the server, data sent by the terminal, the edge proxy may directly forward the data to the server without decrypting or encrypting the data. FIG. 9 shows still another data transmission method according to an embodiment of this application. After an edge proxy sends key transmission data to a server, as shown in FIG. 9, the method includes S901 to S905.

S901: A terminal sends terminal encrypted data to the edge proxy.

The terminal encrypted data is encrypted by the terminal by using a first key.

It may be understood that, the terminal encrypted data sent by the terminal to the edge proxy may be a first data packet or a non-first data packet after the terminal establishes a secure connection to the edge proxy.

S902: The edge proxy receives the terminal encrypted data sent by the terminal, and determines second addition information corresponding to the terminal.

The second addition information carries identification information but does not carry key information.

In some embodiments, the edge proxy sends the key transmission data to the server, and the edge proxy stores the identification information corresponding to the terminal, that is, the edge proxy may find the corresponding identification information based on the terminal.

Further, the edge proxy may establish an association relationship between the terminal and the identification information, and the edge proxy may determine the corresponding identification information based on the association relationship and the terminal. It may be understood that, in another embodiment, the identification information includes information corresponding to the terminal, and all identification information stored by the edge proxy is searched based on the terminal, to determine the identification information corresponding to the terminal.

In some embodiments, the identification information includes an identification part and a distinguishing part, where the identification part is a device identifier of a corresponding edge proxy, for example, an internet protocol (Internet Protocol, IP) address of the edge proxy. Certainly, the identification part may also be another identifier, for example, a media access control (media access control, MAC) address. The distinguishing part may be a random value. For example, the edge proxy generates five random values, and uses the five random values as distinguishing parts of five pieces of identification information. Certainly, the distinguishing part may also be a value of another type, provided that the distinguishing part can be used to distinguish between a plurality of terminals.

In some embodiments, the second addition information further includes flag information, used to identify whether the second addition information includes key information. For example, if the flag information is 0, the second addition information carries the identification information but does not carry the key information. That is, if the flag information is a second value, the second value indicates that the second addition information does not carry the key information.

In some embodiments, the second addition information further carries integrity information, where the integrity information is also referred to as an integrity check code, and is used to check integrity of the second addition information, to perform integrity protection on the second addition information, that is, the second addition information is not damaged or modified, is not lost, and cannot be changed without authorization in a transmission process of the edge proxy. The integrity information is determined by the edge proxy by using an integrity key and a preset integrity algorithm, where the integrity key is the same as the first key.

In some embodiments, the second addition information further carries length information, and the length information indicates a length of the second addition information. The length may be an agreed fixed length, or may be a length determined based on an actual requirement.

S903: Form data transmission data based on the terminal encrypted data and the second addition information.

In some embodiments, the second addition information is used as a tail of a data packet of the data transmission data, so that the second addition information is parsed by a subsequent device (for example, the server), thereby reducing a probability that the data packet is discarded because the data is not parsed. It may be understood that the second addition information may also be located at another location of the data transmission data, for example, located in the middle of the data transmission data or at another specified location.

It may be understood that, the terminal encrypted data sent by the terminal to the edge proxy may be a first data packet or a non-first data packet after the terminal establishes a secure connection to the edge proxy. In this case, the edge proxy has sent the key information corresponding to the terminal to the server, and therefore the edge proxy forwards the first data packet and the non-first data packet in a same manner, that is, adds corresponding second addition information, to form the data transmission data.

S904: The edge proxy sends the data transmission data to the server.

S905: The server receives the data transmission data sent by the edge proxy, determines, based on the identification information, a first key corresponding to the terminal, and decrypts the terminal encrypted data based on the first key.

The data transmission data carries the second addition information and first encrypted data, the second addition information carries the identification information but does not carry the key information, and the terminal encrypted data is encrypted by the terminal by using the first key.

In some embodiments, after receiving the key transmission data that carries the first addition information, the server establishes an association relationship between the first key and the identification information, and may determine the corresponding first key based on the association relationship and the identification information. Certainly, in another embodiment, the server stores the identification information corresponding to the terminal and the first key corresponding to the terminal, and determines the corresponding terminal based on the identification information, to determine the first key corresponding to the terminal.

In this way, after the edge proxy sends, to the server by using the key transmission data, the key information corresponding to the terminal, the edge proxy and the server store the identification information corresponding to the terminal, and may identify the terminal and the first key corresponding to the terminal based on the identification information. Therefore, the edge proxy subsequently receives data sent by the terminal to the server, and the edge proxy no longer needs to include key information in a forwarding process. The identification information is added to the data transmission data, so that the server determines, based on the identification information in the second addition information, the first key corresponding to the terminal, and may decrypt the terminal encrypted data based on the first key, thereby reducing a size of the data transmission data. In a data forwarding process, the edge proxy does not need to encrypt or decrypt the data, thereby reducing consumption of computing resources of the edge proxy and improving a throughput of the edge proxy. In addition, the key information needs to be transmitted only once in the key transmission data, to avoid transmitting the key information for a plurality of times and ensure key security.

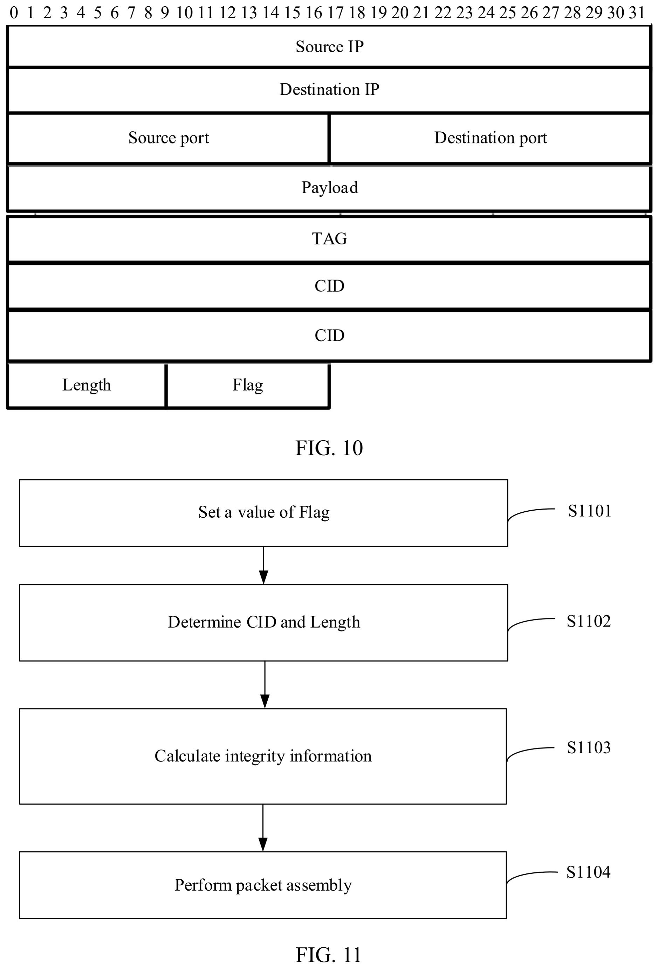

FIG. 10 is a diagram of a packet encapsulation format of data transmission data according to an embodiment of this application. The data transmission data in FIG. 10 is similar to the key transmission data in FIG. 4. The data transmission data in FIG. 10 includes terminal encrypted data and second addition information. The terminal encrypted data includes a source IP, a destination IP, a source port, a destination port, and a payload, and is the same as the terminal encrypted data in the key transmission data. A difference is as follows:

The second addition information in FIG. 10 does not carry key information (that is, an application secret ciphertext and a cipher suite), and Flag (flag information) in FIG. 10 is a second value, indicating that the second addition information does not carry the key information.

FIG. 11 is a diagram of a process in which an edge proxy assembles data transmission data according to an embodiment of this application. As shown in FIG. 11, a process of assembling the data transmission data includes S1101 to S1104.

S1101: Set a value of Flag.

Specifically, the edge proxy receives terminal encrypted data sent by a terminal, determines that the terminal encrypted data is a non-first data packet that is sent by the terminal and that is received by the edge proxy after the terminal establishes a secure connection to the edge proxy, and determines that Flag is a second value. For example, the second value is 1, indicating that second addition information does not need to carry key information.

S1102: Determine CID and Length.

Specifically, CID is identification information, and the edge proxy may establish an association relationship between the identification information and the corresponding terminal, and search for the corresponding identification information based on the terminal and the association relationship. Length is a length of the second addition information, and the length may be a fixed value, or may be a value that is set based on an actual scenario.

S1103: Calculate integrity information.

Specifically, the edge proxy determines an encryption key, that is, a first key, generated when the edge proxy establishes a TLS connection to the terminal, and calculates, based on a second key and a preset integrity protection algorithm, the second addition information and the integrity information corresponding to the terminal encrypted data.

S1104: Perform packet assembly.

Specifically, Flag, CID, Length, and the integrity information are used to form the second addition information, and the second addition information is used as a tail of the terminal encrypted data to form a new data packet, that is, the data transmission data.

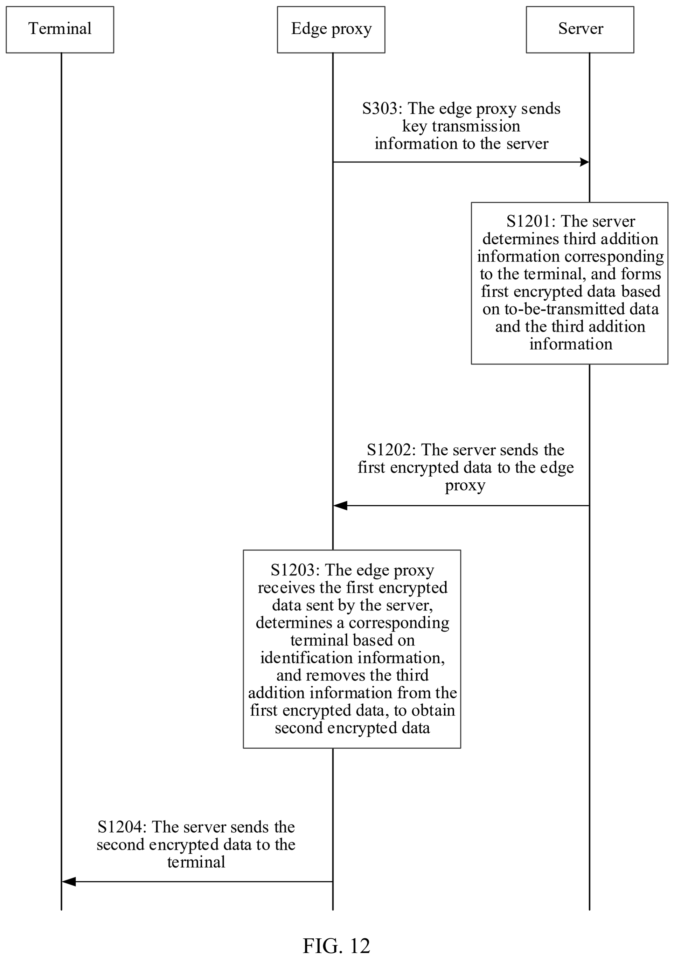

It may be understood that after the terminal establishes the secure connection to the edge proxy, the terminal sends data to the server via the edge proxy, and the server may also send data to the server via the edge proxy. The data may be response data corresponding to the data sent by the terminal, or may be data actively sent by the server to the edge proxy. After the terminal establishes the secure connection to the edge proxy, and the edge proxy sends the key information corresponding to the terminal to the server, the server determines, based on the key information, the first key corresponding to the terminal. When sending data to the terminal, the server may encrypt the data based on the first key. In this case, when forwarding the data to the terminal, the edge proxy may directly forward the data to the terminal without decrypting the data. FIG. 12 shows still another data transmission method according to an embodiment of this application. As shown in FIG. 12, after the edge proxy sends key transmission data to the server, the data transmission method further includes S1201 to S1204.

S1201: The server determines third addition information corresponding to the terminal, and forms first encrypted data based on to-be-transmitted data and the third addition information.

The third addition information carries identification information but does not carry key information, and the to-be-transmitted data is encrypted by the server by using the first key corresponding to the terminal.

The to-be-transmitted data is data sent by the server to the terminal via the edge proxy.

In some embodiments, the third addition information further includes flag information, used to identify whether the third addition information includes the key information. For example, if the flag information is 0, the third addition information carries the identification information but does not carry the key information. That is, if the flag information is a second value, the second value indicates that the third addition information does not carry the key information.

In some embodiments, the third addition information further carries integrity information, where the integrity information is also referred to as an integrity check code, and is used to check integrity of the second addition information, to perform integrity protection on the third addition information, that is, the third addition information is not damaged or modified, is not lost, and cannot be changed without authorization in a transmission process of the edge proxy. The integrity information is determined by the edge proxy by using an integrity key and a preset integrity algorithm, where the integrity key is the same as the first key.

In some embodiments, the third addition information further carries length information, and the length information indicates a length of the third addition information. The length may be an agreed fixed length, or may be a length determined based on an actual requirement.

S1202: The server sends the first encrypted data to the edge proxy.

S1203: The edge proxy receives the first encrypted data sent by the server, determines a corresponding terminal based on the identification information, and removes the third addition information from the first encrypted data, to obtain second encrypted data.

The first encrypted data carries the third addition information, the third addition information carries the identification information but does not carry the key information, and the second encrypted data is encrypted by the server by using the first key corresponding to the terminal.

S1204: The server sends the second encrypted data to the terminal.

In this way, after the server receives the key transmission data sent by the terminal, the server may further send data to the terminal, and the server encrypts the data by using the stored first key of the terminal. The edge proxy does not need to decrypt or encrypt the data, and forwards the data to the terminal after removing the third addition information from the data. Because the edge proxy does not need to decrypt or encrypt the data, consumption of computing resources of the edge proxy is reduced and a throughput of the edge proxy is improved.

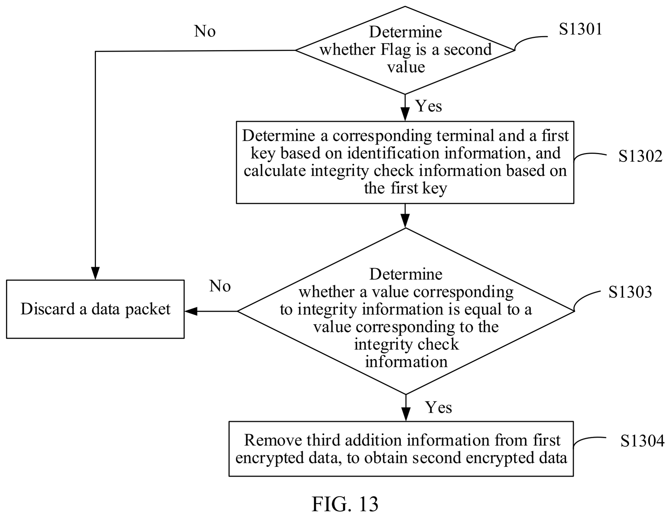

FIG. 13 is a diagram of a process in which an edge proxy processes first encrypted data according to an embodiment of this application. As shown in FIG. 13, the process of processing the first encrypted data includes S1301 to S1304.

S1301: Determine whether Flag is a second value.

Specifically, Flag (that is, flag information) in third encrypted data sent by a server is a fixed value, that is, a second value (for example, 1). If Flag is not the second value, it is determined that the third encrypted data is damaged or lost, and a third data packet is discarded. If Flag is the second value, a subsequent step is performed.

S1302: Determine a corresponding terminal and a first key based on identification information, and calculate integrity check information based on the first key.

Specifically, the first encrypted data carries third addition information and second encrypted data, and the third addition information carries the identification information. The edge proxy determines the corresponding terminal based on the identification information, and determines the first key corresponding to the terminal; and then determines to calculate the integrity check information based on the first key, the second encrypted data, and a preset integrity algorithm.

S1303: Determine whether a value corresponding to integrity information is equal to a value corresponding to the integrity check information.

Specifically, if the value corresponding to the integrity information is equal to the value corresponding to the integrity check information, it is determined that the second encrypted data has integrity, and a subsequent step may be performed; or if the value corresponding to the integrity information is not equal to the value corresponding to the integrity check information, it is determined that the second encrypted data does not have integrity, for example, is damaged or modified, and the edge proxy discards the data packet.

S1304: Remove the third addition information from the first encrypted data, to obtain the second encrypted data.

Specifically, after it is determined that the first encrypted data has integrity and Flag is the second value, the third addition information is removed from the first encrypted data, to obtain the second encrypted data, so that the edge proxy can send the second encrypted data to the corresponding terminal.

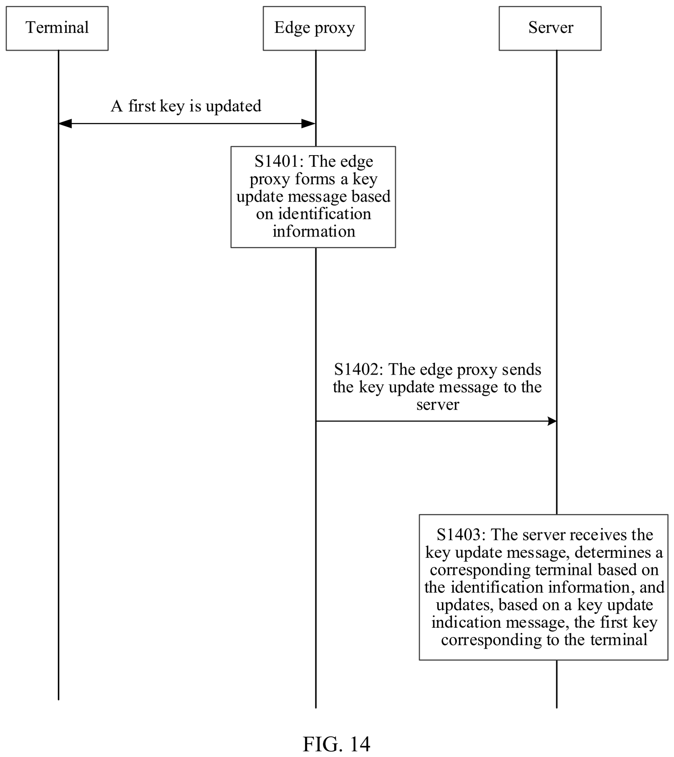

It may be understood that, after a secure connection is established between the edge proxy and the terminal, to ensure data transmission security, an encryption key between the edge proxy and the terminal needs to be periodically updated. When the key is updated between the edge proxy and the terminal, that is, after the first key is updated, the edge proxy indicates, by using a key update message, the server to update the key corresponding to the terminal, to ensure security of the key corresponding to the terminal on the server side. FIG. 14 is a schematic flowchart of another data transmission method according to an embodiment of this application. As shown in FIG. 14, after a first key between a terminal and an edge proxy is updated, the method further includes S1401 to S1403.

S1401: The edge proxy forms a key update message based on identification information.

The key update message carries a key update indication message and second addition information, the second addition information carries the identification information, and the key update indication message indicates a server to update the first key.

The key update indication message is an indication message used for key update (Key Update (KU)) in the TLS standard. Details are not described herein again.

The key update message may be initiated by the terminal, or may be initiated by the edge proxy. If the key update message is initiated by the terminal, the edge proxy forwards the key update indication message to the server after encrypting the key update indication message. If the key update message is initiated by the edge proxy, the edge proxy forwards the key update indication message to the server after sending the key update indication message to the terminal.

S1402: The edge proxy sends the key update message to the server.

S1403: The server receives the key update message, determines a corresponding terminal based on the identification information, and updates, based on the key update indication message, the first key corresponding to the terminal.

The key update message carries the key update indication message and the second addition information, the second addition information carries the identification information, and the key update indication message indicates the server to update the first key.

In this way, when a key between the terminal and the edge proxy is updated, the edge proxy forms the key update message, and then sends the key update message to the server. The server updates the first key based on the key update indication message in the key update message, and synchronously updates the first key with the terminal and the edge proxy via the server, to ensure security of the first key.

In some embodiments, the key update indication message is encrypted by the edge proxy by using the first key. After receiving the key update message, the server determines, based on the identification information, the first key corresponding to the terminal, encrypts the key update message based on the first key, updates the first key based on decrypted key update indication message, and encrypts the key update indication message, to ensure message transmission security.

According to the data transmission method provided in this application, after the terminal establishes the secure connection to the edge proxy, the edge proxy sends the key information corresponding to the terminal to the server, the server determines, based on the key information, the first key corresponding to the terminal, and when forwarding, to the server, data sent by the terminal, the edge proxy does not need to decrypt or encrypt the data, thereby reducing consumption of computing resources of the edge proxy and improving a throughput of the edge proxy. Encryption of the data forwarded by the edge proxy is completed by the terminal, and decryption is completed by the server. The edge proxy does not need to decrypt or encrypt the forwarded data, thereby reducing a quantity of times of using the encryption key on the edge proxy side and improving security of the encryption key.

It should be understood that the foregoing descriptions are merely intended to help a person skilled in the art better understand embodiments of this application, but are not intended to limit the scope of embodiments of this application. It is clear that a person skilled in the art may make various equivalent modifications or changes based on the foregoing examples. For example, some steps in all of the foregoing methods may be unnecessary, or some steps may be newly added. Alternatively, any two or more of the foregoing embodiments are combined. A modified, changed, or combined solution also falls within the scope of the embodiments of this application.

It should be further understood that division of manners, cases, categories, and embodiments in embodiments of this application is merely intended for ease of description, and should not constitute a particular limitation. The features in the manners, categories, cases, and embodiments may be combined without contradiction.

It should be further understood that numerals used in embodiments of this application are merely distinguished for ease of description, but are not intended to limit the scope of embodiments of this application. The sequence numbers of the foregoing processes do not mean execution sequences. The execution sequences of the processes should be determined based on functions and internal logic of the processes, and should not constitute any limitation on implementation processes of embodiments of this application.

It should be further understood that the foregoing descriptions of the embodiments of this application emphasize differences between the embodiments. For same or similar parts that are not mentioned, refer to the embodiments. For brevity, details are not described herein again.

With reference to FIG. 3 to FIG. 14, the foregoing describes embodiments of the method and the system provided in embodiments of this application. The following describes communication apparatuses provided in embodiments of this application.

In embodiments, according to the foregoing method, each device (including the foregoing first terminal device (for example, a mobile phone), second terminal device (for example, a home storage device), protocol configuration gateway, and TURN server) may be divided into functional modules. For example, each functional module may be obtained through division based on each corresponding function, or two or more functions may be integrated into one processing module. The integrated module may be implemented in a form of hardware. It should be noted that division into the modules in embodiments is an example and is merely logical function division, and may be other division in an actual implementation.

It should be noted that related content of the steps in the foregoing method embodiments may be referenced to function descriptions of corresponding function modules, and details are not described herein again.

The communication apparatus (including the foregoing terminal device, protocol configuration gateway, and TURN server) provided in embodiments of this application is configured to perform the data transmission method provided in the foregoing method embodiments, and therefore can achieve a same effect as the foregoing implementation method. When an integrated unit is used, the terminal device, the protocol configuration gateway, or the TURN server may include a processing module, a storage module, and a communication module. The processing module may be configured to: control and manage an action of the terminal device, the protocol configuration gateway, or the TURN server, for example, may be configured to support the terminal device, the protocol configuration gateway, or the TURN server in performing the steps performed by the processing unit. The storage module may be configured to support storage of program code, data, and the like. The communication module may be configured to support communication between the terminal device, the protocol configuration gateway, or the TURN server and another device.

The processing module may be a processor or a controller. The processor may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device, for example, a radio frequency circuit, a Bluetooth chip, or a Wi-Fi chip, that interacts with another terminal device.

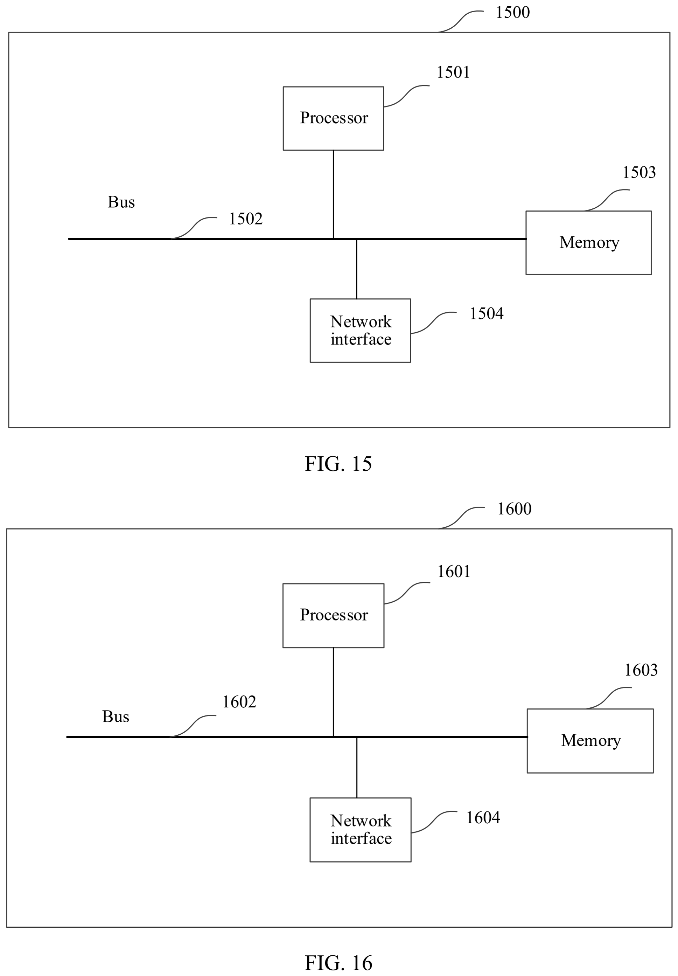

FIG. 15 is a diagram of a structure of an example edge proxy according to this application. The edge proxy shown in FIG. 15 may perform steps in any data transmission method performed by the edge proxy according to embodiments of this application.

The edge proxy 1500 includes at least one processor 1501, a memory 1503, and at least one network interface 1504.

The processor 1501 is, for example, a general-purpose CPU, a digital signal processor (digital signal processor, DSP), a network processor (network processor, NP), a GPU, a neural network processing unit (neural network processing unit, NPU), a data processing unit (data processing unit, DPU), a microprocessor or one or more integrated circuits or application-specific integrated circuits (application-specific integrated circuit, ASIC) configured to implement the solutions of this application, a programmable logic device (programmable logic device, PLD) or another programmable logic device, a transistor logic device, a hardware component, or any combination thereof. The PLD is, for example, a complex programmable logic device (complex programmable logic device, CPLD), a field-programmable logic gate array (field-programmable gate array, FPGA), generic array logic (generic array logic, GAL), or any combination thereof. The processor may implement or execute various logical blocks, modules, and circuits described with reference to content disclosed in this application. Alternatively, the processor may be a combination implementing a computing function, for example, a combination including one or more microprocessors, or a combination of the DSP and the microprocessor.

Optionally, the edge proxy 1500 further includes a bus 1502. The bus 1502 is configured to transfer information between components of the edge proxy 1500. The bus 1502 may be a peripheral component interconnect (peripheral component interconnect, PCI for short) bus, an extended industry standard architecture (extended industry standard architecture, EISA for short) bus, or the like. The bus 1502 may be classified into an address bus, a data bus, a control bus, and the like. For ease of representation, only one thick line is used to represent the bus in FIG. 15, but this does not mean that there is only one bus or only one type of bus.

The memory 1503 is, for example, a read-only memory (read-only memory, ROM) or another type of storage device that can store static information and instructions, or a random access memory (random access memory, RAM) or another type of dynamic storage device that can store information and instructions, or an electrically erasable programmable read-only memory (electrically erasable programmable read-only Memory, EEPROM), a compact disc read-only memory (compact disc read-only memory, CD ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer. However, this is not limited thereto. For example, the memory 1503 exists independently, and is connected to the processor 1501 through the bus 1502. Alternatively, the memory 1503 may be integrated with the processor 1501.

The network interface 1504 is any apparatus like a transceiver, and is configured to communicate with another device or a communication network. The communication network may be the Ethernet, a radio access network (radio access network, RAN), a wireless local area network (wireless local area network, WLAN), or the like. The network interface 1504 may include a wired network interface, and may further include a wireless network interface. Specifically, the network interface 1504 may be an Ethernet (Ethernet) interface, such as a fast Ethernet (fast Ethernet, FE) interface or a gigabit Ethernet (gigabit Ethernet, GE) interface, an asynchronous transfer mode (asynchronous transfer mode, ATM) interface, a WLAN interface, a cellular network interface, or a combination thereof. The Ethernet interface may be an optical interface, an electrical interface, or a combination thereof. In some implementations of this application, the network interface 1504 may be used by the edge proxy 1500 to communicate with another device.

In a specific implementation, in an implementation, the processor 1501 may include one or more CPUs. Each of the processors may be a single-core processor or a multi-core processor. The processor herein may be one or more devices, circuits, and/or processing cores configured to process data (for example, computer program instructions).

In a specific implementation, in some implementations, the edge proxy 1500 may include a plurality of processors. Each of the processors may be a single-core processor or a multi-core processor. The processor herein may be one or more devices, circuits, and/or processing cores configured to process data (for example, computer program instructions).

In some implementations, the memory 1503 is configured to store program instructions for executing the solutions of this application, and the processor 1501 may execute the program instructions stored in the memory 1503. In other words, the edge proxy 1500 may implement, by using the program instructions in the processor 1501 and the memory 1503, the method provided in method embodiments shown in the foregoing embodiments. The program instructions may include one or more software modules. Optionally, the processor 1501 may also store the program instructions for executing the solutions in this application.

In a specific implementation process, the processor 1501 in the edge proxy 1500 in this application reads the instructions in the memory 1503, so that the edge proxy 1500 shown in FIG. 15 can perform all or some steps of the data transmission methods performed by the edge proxy in FIG. 3, FIG. 4, FIG. 5, FIG. 6, and FIG. 7.

The steps of the method in the foregoing embodiment are completed by using an integrated logic circuit of hardware in the processor of the edge proxy 1500, or by using instructions in a form of software. The steps in the method embodiment disclosed with reference to this application may be directly performed and completed by the hardware processor, or may be performed and completed by using a combination of hardware in the processor and a software module. The software module may be located in a mature storage medium in the art such as a random access memory, a flash memory, a read-only memory, a programmable read-only memory, an electrically erasable programmable memory, or a register. The storage medium is located in a memory, and the processor reads information in the memory, and completes the steps in the method embodiment in combination with hardware of the processor. To avoid repetition, details are not described herein again.

FIG. 16 is a diagram of a structure of an example server according to this application. The server shown in FIG. 16 may perform the steps in the data transmission methods performed by the server in FIG. 3, FIG. 4, FIG. 5, FIG. 6, and FIG. 7.

The server 1600 includes at least one processor 1601, a memory 1603, and at least one network interface 1604.

The processor 1601 is, for example, a general-purpose CPU, a digital signal processor (digital signal processor, DSP), a network processor (network processor, NP), a GPU, a neural network processing unit (neural network processing unit, NPU), a data processing unit (data processing unit, DPU), a microprocessor or one or more integrated circuits or application-specific integrated circuits (application-specific integrated circuit, ASIC) configured to implement the solutions of this application, a programmable logic device (programmable logic device, PLD) or another programmable logic device, a transistor logic device, a hardware component, or any combination thereof. The PLD is, for example, a complex programmable logic device (complex programmable logic device, CPLD), a field-programmable gate array (field-programmable gate array, FPGA), generic array logic (generic array logic, GAL), or any combination thereof. The processor may implement or execute various logical blocks, modules, and circuits described with reference to content disclosed in this application. Alternatively, the processor may be a combination implementing a computing function, for example, a combination including one or more microprocessors, or a combination of the DSP and the microprocessor.

Optionally, the server 1600 further includes a bus 1602. The bus 1602 is configured to transfer information between components of the server 1600. The bus 1602 may be a peripheral component interconnect (peripheral component interconnect, PCI for short) bus, an extended industry standard architecture (extended industry standard architecture, EISA for short) bus, or the like. The bus 1602 may be classified into an address bus, a data bus, a control bus, and the like. For ease of representation, only one thick line is used to represent the bus in FIG. 16, but this does not mean that there is only one bus or only one type of bus.

The memory 1603 is, for example, a read-only memory (read-only memory, ROM) or another type of storage device that can store static information and instructions, or a random access memory (random access memory, RAM) or another type of dynamic storage device that can store information and instructions, or an electrically erasable programmable read-only memory

(electrically erasable programmable read-only Memory, EEPROM), a compact disc read-only memory (compact disc read-only memory, CD ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer. However, this is not limited thereto. For example, the memory 1603 exists independently, and is connected to the processor 1601 through the bus 1602. Alternatively, the memory 1603 may be integrated with the processor 1601.

The network interface 1604 is any apparatus like a transceiver, and is configured to communicate with another device or a communication network. The communication network may be the Ethernet, a radio access network (radio access network, RAN), a wireless local area network (wireless local area network, WLAN), or the like. The network interface 1604 may include a wired network interface, and may further include a wireless network interface. Specifically, the network interface 1604 may be an Ethernet (Ethernet) interface, such as a fast Ethernet (fast Ethernet, FE) interface or a gigabit Ethernet (gigabit Ethernet, GE) interface, an asynchronous transfer mode (asynchronous transfer mode, ATM) interface, a WLAN interface, a cellular network interface, or a combination thereof. The Ethernet interface may be an optical interface, an electrical interface, or a combination thereof. In some implementations of this application, the network interface 1604 may be used by the server 1600 to communicate with another device.

In a specific implementation, in an implementation, the processor 1601 may include one or more CPUs. Each of the processors may be a single-core processor or a multi-core processor. The processor herein may be one or more devices, circuits, and/or processing cores configured to process data (for example, computer program instructions).

In a specific implementation, in some implementations, the server 1600 may include a plurality of processors. Each of the processors may be a single-core processor or a multi-core processor. The processor herein may be one or more devices, circuits, and/or processing cores configured to process data (for example, computer program instructions).

In some implementations, the memory 1603 is configured to store program instructions for executing the solutions of this application, and the processor 1601 may execute the program instructions stored in the memory 1603. In other words, the server 1600 may implement, by using the program instructions in the processor 1601 and the memory 1603, the method provided in method embodiments shown in the foregoing embodiments. The program instructions may include one or more software modules. Optionally, the processor 1601 may also store the program instructions for executing the solutions in this application.

The steps of the method in the foregoing embodiment are completed by using an integrated logic circuit of hardware in the processor of the server 1600, or by using instructions in a form of software. The steps in the method embodiment disclosed with reference to this application may be directly performed and completed by the hardware processor, or may be performed and completed by using a combination of hardware in the processor and a software module. The software module may be located in a mature storage medium in the art such as a random access memory, a flash memory, a read-only memory, a programmable read-only memory, an electrically erasable programmable memory, or a register. The storage medium is located in a memory, and the processor reads information in the memory, and completes the steps in the method embodiment in combination with hardware of the processor. To avoid repetition, details are not described herein again.

It should be understood that the processor may be a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor, any conventional processor, or the like. It should be noted that the processor may be a processor that supports an advanced reduced instruction set computer machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information about a device type.

The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. By way of example, and not limitation, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a data transmission system, including a server and an edge proxy. The server may perform steps in a data transmission method performed by any server provided in embodiments of this application, and the edge proxy may perform steps in any data transmission method performed by the edge proxy provided in embodiments of this application.

In an example embodiment, an embodiment of this application provides a computer program (product). The computer program (product) includes computer program code. When the computer program code is run by a computer, a computer is enabled to perform steps in any data transmission method performed by the server provided in embodiments of this application.

In an example embodiment, an embodiment of this application provides a computer program (product). The computer program (product) includes computer program code. When the computer program code is run by a computer, a computer is enabled to perform steps in any data transmission method performed by the edge proxy provided in embodiments of this application.

In an example embodiment, an embodiment of this application provides a computer-readable storage medium. The computer-readable storage medium stores a program or instructions. When the program or the instructions are run on a computer, any data transmission method performed by the server provided in embodiments of this application is performed.

In an example embodiment, an embodiment of this application provides a computer-readable storage medium. The computer-readable storage medium stores a program or instructions. When the program or the instructions are run on a computer, any data transmission method performed by the edge proxy provided in embodiments of this application is performed.

In an example embodiment, an embodiment of this application provides a chip, including a processor, configured to: invoke, from a memory, instructions stored in the memory and run the instructions, so that a communication device in which the chip is installed performs any data transmission method performed by the edge proxy provided in embodiments of this application.

In an example embodiment, an embodiment of this application provides a chip, including a processor, configured to: invoke, from a memory, instructions stored in the memory and run the instructions, so that a communication device in which the chip is installed performs any data transmission method performed by the server provided in embodiments of this application.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium that can be accessed by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

The terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should also be understood that although the following descriptions use terms such as "first" and "second" to describe various elements, these elements should not be limited by the terms. These terms are simply used to distinguish one element from another.

It should be further understood that sequence numbers of the processes do not mean execution sequences in embodiments of this application. The execution sequences of the processes should be determined based on functions and internal logic of the processes, and should not constitute any limitation on implementation processes of embodiments of this application.

The term "at least one" in this application means one or more, and the term "a plurality of" in this application means two or more. For example, a plurality of second devices means two or more second devices. The terms "system" and "network" are often used interchangeably herein.

It should be understood that the terms used in the descriptions of the various examples herein are merely intended to describe specific examples and are not intended to impose a limitation. As used in the descriptions of the various examples and in the appended claims, singular forms "one ("a" or "an")" and "the" are intended to also include a plural form, unless otherwise explicitly indicated in the context.

It should further be understood that the term "and/or" used in this specification indicates and includes any or all possible combinations of one or more of the associated listed items. The term "and/or" describes an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

It should be further understood that the term "if" may be interpreted as a meaning of "when" ("when" or "upon"), "in response to determining", or "in response to detecting". Similarly, based on the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

The foregoing descriptions are merely embodiments of this application, but are not intended to limit this application. Any modification, equivalent replacement, improvement, or the like made without departing from the principle of this application shall fall within the protection scope of this application.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A data transmission method, applied to an edge proxy, wherein the edge proxy is a server having a reverse proxy function, and the method comprises:
after the edge proxy establishes a secure connection to a terminal, determining first addition information corresponding to the terminal, wherein the first addition information carries key information, the key information is used to generate a first key, and the first key is a key determined when the terminal establishes the secure connection to the edge proxy;
forming key transmission data based on the first addition information; and
sending the key transmission data to a server.

2. The method according to claim 1, wherein the first addition information further carries identification information, the identification information is used to identify a corresponding terminal, and after sending the key transmission data to the server, the data transmission method further comprises:
receiving terminal encrypted data sent by the terminal, wherein the terminal encrypted data is encrypted by the terminal by using the first key;
determining second addition information corresponding to the terminal, wherein the second addition information carries the identification information but does not carry the key information;
forming data transmission data based on the encrypted data and the second addition information; and
sending the data transmission data to the server.

3. The method according to claim 1 or 2, wherein forming the key transmission data based on the first addition information comprises:
receiving the terminal encrypted data sent by the terminal, wherein the terminal encrypted data is encrypted by the terminal by using the first key; and
forming the key transmission data based on the terminal encrypted data and the first addition information.

4. The method according to claim 3, wherein the terminal encrypted data in the key transmission data is a first data packet that is sent by the terminal and that is received by the edge proxy after the terminal establishes the secure connection to the edge proxy.

5. The method according to claim 2, wherein the method further comprises:
receiving first encrypted data sent by the server, wherein the first encrypted data carries third addition information, and the third addition information carries the identification information but does not carry the key information;
determining a corresponding terminal based on the identification information;
removing the third addition information from the first encrypted data, to obtain second encrypted data, wherein the second encrypted data is encrypted by using the first key corresponding to the terminal; and
sending the second encrypted data to the terminal.

6. The method according to claim 2 or 5, wherein after the first key between the terminal and the edge proxy is updated, the data transmission method further comprises:
forming the key update message based on the identification information, wherein the key update message carries a key update indication message and the second addition information, the second addition information carries the identification information, and the key update indication message indicates the server to update the first key.

7. The method according to any one of claims 1 to 6, wherein the key information is encrypted by the edge proxy by using a second key, and the second key is a key determined when the edge proxy establishes the secure connection to the server.

8. The method according to any one of claims 1 to 7, wherein the first addition information is used as a tail of a data packet of the key transmission data.

9. The method according to any one of claims 1 to 8, wherein the first addition information further carries flag information, the flag information is a first value, and the first value indicates that the first addition information carries the key information.

10. The method according to claim 2 or 5, wherein the identification information comprises an edge proxy identifier and a terminal identifier, the edge proxy identifier is used to identify a corresponding edge proxy, and the terminal identifier is used to identify a corresponding terminal.

11. A data transmission method, applied to a server, wherein the data transmission method comprises:
receiving key transmission data sent by an edge proxy, wherein the edge proxy is a server having a reverse proxy function, the key transmission data carries first addition information, the first addition information carries key information, the key information is used to generate a first key, and the first key is a key determined when a terminal establishes a secure connection to the edge proxy; and
determining the first key based on the key information.

12. The method according to claim 11, wherein the first addition information further carries identification information, the identification information is used to identify a corresponding terminal, and after receiving the key transmission data sent by the edge proxy, the data transmission method further comprises:
receiving data transmission data sent by the edge proxy, wherein the data transmission data carries second addition information and terminal encrypted data, the second addition information carries the identification information but does not carry the key information, and the terminal encrypted data is encrypted by the terminal by using the first key;
determining, based on the identification information, the first key corresponding to the terminal; and
decrypting the terminal encrypted data based on the first key.

13. The method according to claim 11 or 12, wherein the key transmission data further carries the terminal encrypted data, and the terminal encrypted data is encrypted by the terminal by using the first key.

14. The method according to claim 12, wherein after receiving, by the server, the key transmission data, the method further comprises:
determining third addition information corresponding to the terminal, wherein the third addition information carries the identification information but does not carry the key information;
forming first encrypted data based on the third addition information; and
sending the first encrypted data to the edge proxy.

15. The method according to any one of claims 11 to 14, wherein the data transmission method further comprises:
receiving a key update message, wherein the key update message carries a key update indication message and the second addition information, the second addition information carries the identification information, and the key update indication message indicates the server to update the first key;
determining a corresponding terminal based on the identification information; and
updating, based on the key update indication message, the first key corresponding to the terminal.

16. The method according to any one of claims 11 to 15, wherein the key information is encrypted by the edge proxy by using a second key, and the second key is a key determined when the edge proxy establishes the secure connection to the server; and
determining the first key based on the key information comprises:
decrypting the key information by using the second key, to obtain the decrypted key information; and
determining the first key based on the decrypted key information.

17. The method according to any one of claims 11 to 16, wherein the first addition information is used as a tail of a data packet of the key transmission data.

18. The method according to any one of claims 11 to 17, wherein the first addition information further carries flag information, the flag information is a first value, and the data transmission method further comprises:
determining, based on the first value, that the first addition information carries the key information.

19. The method according to any one of claims 11 to 18, wherein the first addition information further carries integrity information, and the data transmission method further comprises:
checking integrity of the key transmission data based on the first key and the integrity information.

20. An edge proxy, comprising:
a memory, wherein the memory comprises computer-readable instructions; and
a processor communicating with the memory, wherein the processor is configured to execute the computer-readable instructions, so that the edge proxy performs the data transmission method according to any one of claims 1 to 10.

21. A server, comprising:
a memory, wherein the memory comprises computer-readable instructions; and
a processor communicating with the memory, wherein the processor is configured to execute the computer-readable instructions, so that the server performs the data transmission method according to any one of claims 11 to 19.

22. A data transmission system, comprising a server and an edge proxy, wherein the edge proxy is configured to perform the data transmission method according to any one of claims 1 to 10, and the server is configured to perform the data transmission method according to any one of claims 11 to 19.

23. A computer-readable storage medium, comprising a program or instructions, wherein when the program or the instructions are executed by a processor, the data transmission method according to any one of claims 1 to 19 is implemented.

24. A computer program product, comprising a computer program, wherein when the computer program is executed by a processor, the data transmission method according to any one of claims 1 to 19 is implemented.
